# EUROPÄISCHE PATENTSCHRIFT

(11) **EP 0 937 311 B1**
(45) Veröffentlichungstag und Bekanntmachung des Hinweises auf die Patenterteilung: **19.12.2001**
(21) Anmeldenummer: 98943643.1
(22) Anmeldetag: 08.07.1998
(51) Int. Cl.: H01Q 1/12, G01S 13/93

(54) **VORRICHTUNG ZUR BEFESTIGUNG EINES ENTFERNUNGSSENSORS AN EINEM KRAFTFAHRZEUG**
DEVICE FOR FIXING A DISTANCE SENSOR TO AN AUTOMOBILE
DISPOSITIF DE FIXATION D'UN CAPTEUR DE DISTANCE SUR UN VEHICULE AUTOMOBILE

(30) Priorität: 08.09.1997 DE 19739298
(43) Veröffentlichungstag der Anmeldung: 25.08.1999
(73) Patentinhaber: ROBERT BOSCH GMBH, 70442 Stuttgart (DE)
(72) Erfinder: SCHMIDT, Ewald, D-71634 Ludwigsburg (DE); ZEIHER, Jürgen, D-70499 Stuttgart (DE); LUCAS, Bernhard, D-74395 Mundelsheim (DE); LANGENHAN, Dirk, D-71701 Schwieberdingen (DE)
(86) Internationale Anmeldenummer: DE9801877
(87) Internationale Veröffentlichungsnummer: WO9913525

(56) Entgegenhaltungen:
- WO-A-97/48578
- DE-C- 4 201 214
- DE-C- 19 642 810
- PATENT ABSTRACTS OF JAPAN vol. 017, no. 302 (P-1553), 10. Juni 1993 & JP 05 027037 A (KANSEI CORP), 5. Februar 1993

## Beschreibung

### Stand der Technik

Die vorliegende Erfindung betrifft eine Vorrichtung zur Befestigung eines Entfernungssensors, insbesondere eines Abstandsradars an einem Kraftfahrzeug gemäß dem Oberbegriff des Hauptanspruchs. Sie betrifft insbesondere eine Vorrichtung zur Befestigung des Entfernungssensors an einem Kraftfahrzeug, die gleichzeitig eine einfache und bedienfehlerfreie Verstellung der Ausrichtung (Justierung) des Entfernungssensors beispielsweise im Bezug zur Fahrzeuglängsachse ermöglicht.

Eine gattungsgemäße Vorrichtung ist aus der DE 42 01 214 C1 bekannt. In dieser Schrift ist eine Vorrichtung zum Justieren einer Richtantenne eines Radar-Abstandswarngerätes eines Kraftfahrzeugs beschrieben, bei der die Ausrichtung der Richtantenne mit Hilfe eines Justierscheinwerfers einstellbar ist. Gleichzeitig wird hier eine Vorrichtung zur Befestigung des Radar-Abstandswarngerätes an dem Kraftfahrzeug offenbart. Bei dieser Vorrichtung ist die Richtantenne des Radar-Abstandswarngerätes über eine Drehachse mit einem fahrzeugfesten Gehäuse verbunden. In dieser Ausführung ist eine Justierung der Richtantenne nur in Hochrichtung vorgesehen. Die Justierung kann mittels einer Verstellplatine sowohl über Verstellschrauben als auch über einen Verstellmotor erfolgen. Gemäß der Schrift sei es in das Ermessen eines Fachmanns gestellt, eine Halterung vorzusehen, die eine Verstellbarkeit in zwei oder auch in alle drei Richtungen ermögliche. Einen Hinweis jedoch, wie bei einer solchen Halterung im Hinblick auf eine kostengünstige Großserienfertigung eine leichte Applizierbarkeit an andere Kraftfahrzeuge sowie eine schnelle und bedienfehlerfreie Montage und Justierung Berücksichtigung finden muß, gibt die Schrift nicht. Dementsprechend enthält die Schrift auch keinen Hinweis, wie eine Halterung unter Berücksichtigung dieser zusätzlichen Anforderungen aussehen könnte.

Aus der nicht vorveröffentlichten DE 196 42 810.6-35 ist bekannt, daß eine Halterung für ein Radarsystem oder zumindest dessen Richtantenne in ihrer Art der bekannten Aufhängung oder Lagerung eines Kraftfahrzeugscheinwerfers nachempfunden sein kann. Dabei wird das Radarsystem bzw. seine Richtantenne an drei, in einer Ebene senkrecht zur Hauptstrahlrichtung vorzugsweise L-förmig zueinanderliegenden Punkten fixiert. Die beiden äußeren Aufhängungen liegen damit in zwei Richtungen versetzt zueinander. Sie bestehen jeweils aus einer Gewindestange, die an einem Ende mit einem Kugelzapfen versehen ist und mit diesem beweglich in einer Halterung gelagert ist. Der mittlere, dritte Aufhängepunkt ist ebenfalls mit einem Kugelzapfen beweglich gelagert, er besitzt jedoch in der Regel keine Verstellmöglichkeit in Form einer Gewindestange oder Ähnlichem. Die Schrift weist auf das Problem hin, daß die Justiervorrichtung an unterschiedliche Einbauumgebungen jeweils neu angepaßt werden muß. Sie schlägt dazu ein Radarsystem vor, bei dem zur Justierung der Hauptstrahlrichtung die Position der Sende-/ Empfangselemente des Radarsystems relativ zu einem fokussierenden Mittel veränderbar ist. Ein derartiges Radarsystem erfordert jedoch eine bereits im Ansatz darauf abgestimmte Konstruktion, die beispielsweise eine Verstellbarkeit der Sende-/Empfangselemente innerhalb eines Gehäuses des Entfernungssensors ermöglicht. Auf ein an sich bereits konstruiertes Radarsystem, das eine solche Verstellbarkeit nicht beinhaltet, läßt sich die Lehre dieser Schrift nicht ohne weiteres übertragen. Darüber hinaus ist in der DE 196 42 810.6-35 keine Vorrichtung zur Befestigung des Entfernungssensors an dem Kraftfahrzeug selbst offenbart.

### Aufgabe, Lösung und Vorteile der Erfindung

Aufgabe der vorliegenden Erfindung ist es, eine alternative Vorrichtung für die Befestigung eines Entfernungssensors an einem Kraftfahrzeug anzugeben, die im Hinblick auf die oben genannten Anforderungen optimiert ist. Diese Aufgabe wird durch eine Vorrichtung mit den Merkmalen des Hauptanspruchs gelöst. Vorteilhafte Ausgestaltungen der Erfindung ergeben sich aus den untergeordneten Ansprüchen.

Der Vorteil der Erfindung im Vergleich zu einem Radarsystem gemäß der DE 196 42 810.6-35 besteht darin, daß die Grundkonstruktion eines Entfernungssensors innerhalb seines Gehäuses unverändert bleiben kann. Insofern erfordert die Erfindung keine grundsätzliche Neukonstruktion schon bestehender Entfernungssensoren. Dadurch, daß der Entfernungssensor über einen eigenen Halter an einem Kraftfahrzeug befestigt ist, ist bei seiner Applikation an andere Kraftfahrzeuge nur eine Änderung dieses Halters notwendig. Der Entfernungssensor selbst kann weitgehend unverändert bei verschiedenen Kraftfahrzeugtypen eingesetzt werden. Die Kombination aller Merkmale der Erfindung gewährleistet somit eine einfache Justierung und eine einfache Applikation des Entfernungssensors an einem Kraftfahrzeug. Gegenüber der DE 42 01 214 C1 besitzt die erfindungsgemäße Befestigungsvorrichtung allein schon den Vorteil, eine Justierung des Entfernungssensors in horizontaler und in vertikaler Richtung zu ermöglichen.

Aufgrund der Merkmale, daß die Schrauben im eingebauten Zustand des Entfernungssensors von dessen Vorderseite her schraubbar sind und daß für wenigstens zwei der Schrauben eine Ausdrehsicherung vorgesehen ist, ist eine leichte und vor allem auch gegenüber Bedienungsfehlern gesicherte Justierung möglich. Ohne eine Ausdrehsicherung ist beispielsweise nicht fehlersicher ausgeschlossen, daß der Entfernungssensor beim Justiervorgang duch ein zu weites Herausdrehen der Schrauben vom Kraftfahrzeug herunterfallen kann.

Weitere Vorteile der Erfindung ergeben sich aus dem nachfolgend dargestellten Ausführungsbeispiel.

### Beschreibung von Ausführungsbeispielen

Nachfolgend werden Ausführungsbeispiele der Erfindung anhand einer Zeichnung erläutert. Es zeigen
Figur 1 eine perspektivische Ansicht,
Figur 2 eine erste Seitenansicht,
Figur 3 eine zweite Seitenansicht und
Figur 4 eine Draufsicht auf einen Entfernungssensor mit einer erfindungsgemäßen Befestigungsvorrichtung,
Figur 5 eine Schraube, wie sie bei dem beschriebenen Ausführungsbeispiel der erfindungsgemäßen Befestigungsvorrichtung verwendet ist und
Figur 6a, 6b und Figur 7 Ausführungsbeispiele von Ausdrehsicherungen.

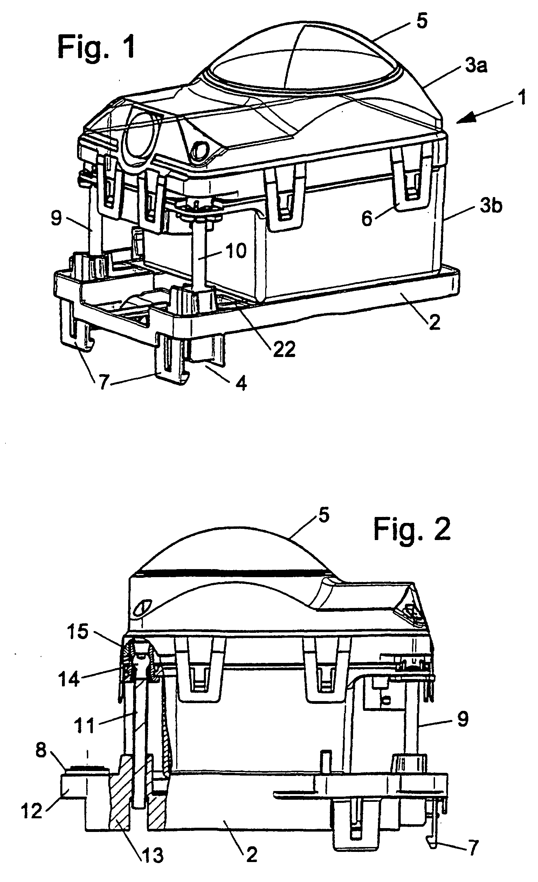

Die Figur 1 zeigt in einer perspektivischen Darstellung und die Figuren 2 bis 4 zeigen in verschiedenen Seitenansichten einen Entfernungssensor 1 mit einer erfindungsgemäßen Vorrichtung zur Befestigung an einem Kraftfahrzeug. Der Entfernungssensor 1 ist in einem kompakten Gehäuse 3 untergebracht, welches hier aus einem unteren Gehäuseteil 3b und einem oberen Gehäuseteil 3a zusammengesetzt ist. Die beiden Gehäuseteile 3a und 3b sind über Klippverbindungen 6 miteinander verbunden. Im oberen Gehäuseteil 3a ist eine Linse 5 vorgesehen zur Fokussierung der verwendeten Meßstrahlen des Entfernungssensors. Dieser beschriebene Aufbau des Entfernungssensors 1, insbesondere die dargestelle Zweiteilung des Gehäuses ist jedoch unabhängig von der Erfindung und kann auch anders ausgeführt sein.

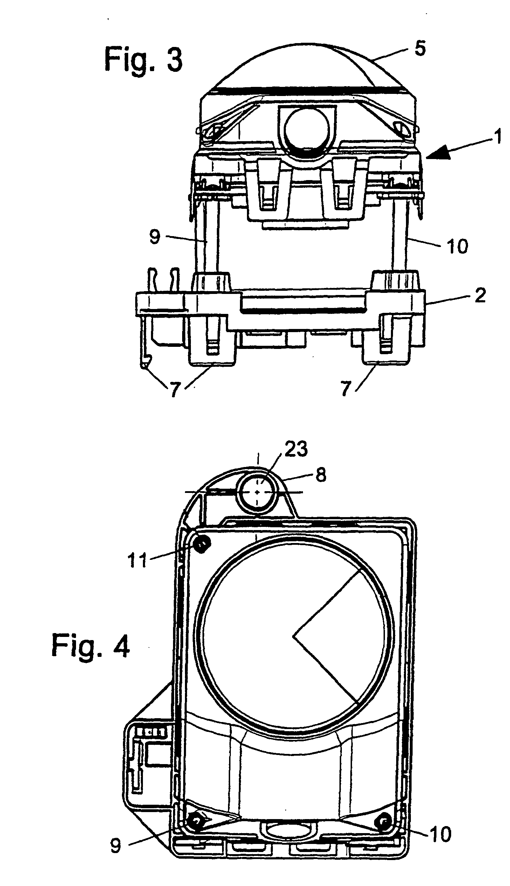

Das Gehäuse 3 des Entfernungssensors 1 ist über Schrauben 9, 10, 11 an einem Halter 2 befestigt. Der Halter 2 besitzt an seiner dem Entfernungssensor 1 abgewandten Seite Fang- oder Schnappelemente 7, mit denen er in entsprechend ausgeformte Aufnehmungen an der Karosserie eines Kraftfahrzeugs einrastet. Diese Fangelemente 7 sind bei diesem Ausführungsbeispiel an einer Längs- und an einer Querseite des Halters 2 vorgesehen. An seiner zweiten Querseite weist der Halter 2 eine Ausformung 8 auf, die mit einer Lochbohrung 23 versehen ist (Figur 4). Wie aus Figur 2 erkennbar ist, bildet die Ausformung 8 einen Anschlag 12 aus, mit dem die Ausformung 8 an einem entsprechenden Karosserieteil des Kraftfahrzeugs anliegt. Durch die Bohrung 23 der Ausformung 8 kann der Halter 2 zusätzlich zu den Fanghaken 7 mit der Karosserie des Kraftfahrzeugs verschraubt werden. Die Fanghaken 7 sowie die Ausformung 8 sind bei einer Applikation der Befestigungsvorrichtung an unterschiedliche Kraftfahrzeuge ggf. neu zu konstruieren. Sie bilden gleichsam einen Adapter für verschiedene Kraftfahrzeugtypen. Auf seiner dem Entfernungssensor 1 zugewandten Seite wird der Halter 2 vorzugsweise immer gleich ausgeführt. Auf dieser Seite wird der Entfernungssensor 1 über Schrauben 9, 10, 11 angeschraubt. Die Schrauben 9, 10, 11 greifen in Einschraubbereiche 13 des Halters 2 ein. Dies ist in Figur 2 am Beispiel der Schraube 11 gezeigt und gewährleistet eine einfache und schnelle Montage bei einer Großserienfertigung.

Wie weiterhin anhand Figur 2 zu erkennen ist, besitzt die Schraube 11 ebenso wie die anderen Schrauben 9, 10 einen kugelförmigen Schraubenkopf 14, der in einer entsprechend ausgeformten Aufnahme 15 des Gehäuses 3 gelagert ist. Die Aufnahme 15 kann dabei auch als eigenständiges Aufnahmeelement hergestellt sein, welches in das Gehäuse des Entfernungssensors eingeclipst wird. Aufgrund des kugelförmigen Schraubenkopfes 14 sowie der entsprechend ausgeformten Aufnahme 15 ist das Gehäuse 3 gegenüber jeder der Schrauben 9, 10, 11 und damit gegenüber dem gesamten Halter 2 bewegbar. Wie anhand Figur 4 zu erkennen ist, bilden die Schrauben 9, 10, 11 aufgrund ihrer L-förmigen Anordnung eine Dreipunktlagerung. Dabei bilden die Schrauben 10 und 11 zwei Loslager und die Schraube 9 ein Festlager.

Ein tieferes Einschrauben beispielsweise der Schraube 11 in den zugehörigen Einschraubbereich 13 bewirkt ein Kippen des Entfernungssensors gegenüber dem Halter 2 um eine Achse, die durch die Aufhängepunkte des Entfernungssensors an den Schrauben 9 und 10 gebildet wird. Um diese Bewegung des Gehäuses 3 zu ermöglichen, weisen die Schraubenköpfe die schon genannte kugelförmige Ausbildung 14 auf. Ein Herausschrauben der Schraube 11 bewirkt ein Kippen des Entfernungssensörs um dieselbe Achse in entgegengesetzter Richtung. Ein Ein- und Ausschrauben der Schraube 10 bewirkt ein Kippen des Entfernungssensors 1 gegenüber dem Halter 2 in der orthogonalen Richtung um eine Achse, welche durch die Aufhängepunkte 9 und 11 verläuft. Somit bietet die erfindungsgemäße Befestigungsvorrichtung die Möglichkeit, den Entfernungssensor 1 bzw. sein Gehäuse 3 in zwei senkrecht zueinander stehenden Richtungen zu verstellen. Trotzdem ist der Entfernungssensor 1 über den Halter 2 jederzeit fest mit einem Karosserieteil des Kraftfahrzeugs verbunden.

Alternativ zu dem hier dargestellten Ausführungsbeispiel, bei dem die Schraubenköpfe 14 kugelförmig ausgebildet sind, könnten stattdessen die Schraubenenden kugelförmig und bewegbar in einer entsprechenden Aufnehmung gelagert sein. Dabei muß dann der jeweilige Schraubenkopf fest mit dem Gehäuse 3 verbunden sein. Die hier dargestellte Ausführung besitzt demgegenüber jedoch den Vorteil, daß die Schrauben bei einer Justierung des Entfernungssensors selbst nicht mitgekippt werden und somit ein Kraft- oder Drehmoment und damit auch die Verschleißwirkung in der Aufnehmung geringer ist. Außerdem kann so die erfindungsgemäße Ausdrehsicherung auf einfache Weise am Schraubenende realisiert werden.

Vorteilhafterweise sind die Schrauben 9, 10, 11 mit selbstschneidenden Gewinden versehen. Die Einschraubbereiche 13 sind demgegenüber vor einem erstmaligen Eindrehen einer Schraube nahezu oder vollständig gewindelos. Dies gewährleistet, daß die eingedrehten Schrauben 9, 10, 11 und damit der Entfernungssensor 1 auch bei einer Großserienfertigung stets spielfrei mit dem Halter 2 verbunden sind.

Weiterhin ist vorgesehen, daß der Bewegungsweg des Entfernungssensors gegenüber dem Halter 2 begrenzt ist. Bei dem hier dargestellten Ausführungsbeispiel kann der Entfernungssensor 1 in jede Richtung beispielsweise um ± 3° gekippt werden. Beim Einschrauben der Schrauben 10 oder 11, das heißt bei einem Kippen des Gehäuses 3 in Richtung des Halters 2, ist der Bewegungsweg durch Anschlagstellen 22, die in der Grundfläche des Halters 2 vorgesehen sind, begrenzt. Damit ist auch die Verstellmöglichkeit des Entfernungssensors 1 gegenüber dem Halter 2 in dieser Richtung begrenzt.

Um ein Herabfallen des Entfernungssensors durch ein zu weites Herausdrehen der Schrauben 9, 10, 11 zu verhindern, sind erfindungsgemäß für wenigstens zwei der Schrauben 9, 10, 11, insbesondere für die Schrauben 10 und 11 Ausdrehsicherungen 4 vorgesehen. Diese Ausdrehsicherungen 4 verhindern, daß die Schrauben 10, 11 vollständig aus dem Einschraubbereich 13 des Halters 2 herausgedreht werden können.

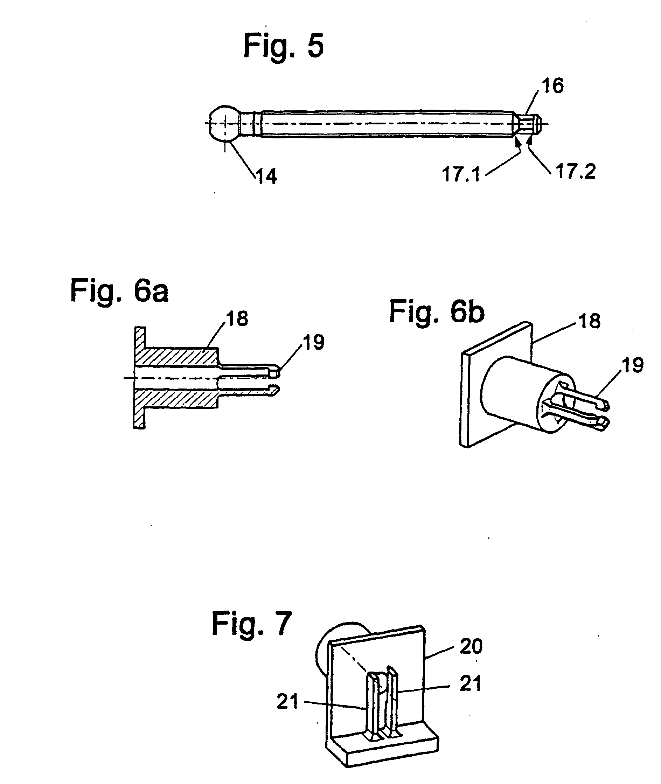

Figur 5 zeigt eine bevorzugte Ausführungsform der Schrauben 10 und 11. Zu sehen ist der kugelförmige Kopf 14. Am entgegengesetzten Ende besitzt die Schraube eine Nut 16, die auf der dem Schraubenende zugewandten Seite einen harten Anschlag 17.2 und auf der dem Schraubenkopf zugewandten Seite einen weichen, daß heißt weniger steilen Anschlag 17.1 besitzt. Figur 6 und Figur 7 zeigen Ausführungsbeispiele von möglichen Ausdrehsicherungen 4. In Figur 6 ist eine Ausdrehsicherung 18 gezeigt, welche eine zylinderförmige Durchführung besitzt, an deren Ende drei Fangelemente 19 in Form von Fanghaken angeordnet sind. Die Schraube gemäß Figur 5 wird durch die zylinderförmige Durchführung der Ausdrehsicherung 18 geführt, bis die Fanghaken 19 in die Nut 16 eingreifen. Durch den harten Anschlag 17.2 am Ende der Schraube ist ein zerstörungsfreies Herausdrehen aus der Ausdrehsicherung 18 nicht mehr möglich. Ein weiteres Hereindrehen der Schraube ist jedoch aufgrund des weichen Anschlags 17.1 jederzeit möglich. Dabei werden die Fanghaken 19 so aufgespreizt, daß die Schraube hindurchpaßt. Die Fang-haken 19 sind wie die gesamte Ausdrehsicherung vorzugsweise als Kunststoffspritzteil gefertigt, wobei die Elastizität des Kunststoffs so gewählt ist, daß die Fanghaken 19 beim Eindrehen einer Schraube 5 nicht abbrechen oder überbogen werden.

Figur 7 zeigt eine alternative Ausführungsform einer Ausdrehsicherung 20. Sie besitzt anstelle der axial angeordneten Fangelemente 19 zwei radial zur eingedrehten Schraube angeordnete Federn 21. Die Funktionsweise der Federn entspricht der bei der Ausführungsform gemäß Figur 6.

Alternativ zu der zuvor dargestellten Nut 16 können die Schrauben an ihrem Ende auch tellerförmig abgeflacht sein. Dies kann beispielsweise dadurch erreicht werden, daß die Schraubenenden mit einem Stempel "flachgeklopft" werden, so daß sie an ihrem Ende eine wulstartige Verdickung aufweisen. Eine weitere Möglichkeit ist, daß nach dem Einschrauben in die Schraubenenden jeweils ein Federring eingeclipst wird. In beiden Fällen weisen die Schraubenenden dadurch einen sprunghaft vergrößerten Durchmesser auf, der ein vollständiges Herausdrehen aus den Einschraubbereichen 13 verhindert. Ein Vorteil dieser Alternative liegt darin, daß hierbei sogar die Fanghaken 19 entfallen können.

Besonders vorteilhaft ist es, wenn der Halter 2 vollständig aus Kunststoff geformt ist. Dies ermöglicht zum einen, den Halter 2 vollständig als kostengünstiges Spritzgußteil herzustellen und gewährleistet andererseits, daß keine Korrosionsprobleme auftreten können. Die gezeigten Ausdrehsicherungen 4 werden vorteilhafterweise mit dem Halters 2 mitgespritzt.

Ein weiterer Vorteil des hier gezeigten Ausführungsbeispiels liegt darin, daß die Schraben 9, 10, 11 von der Vorderseite des Entfernungssensors her zugänglich und schraubbar sind.

## Patentansprüche

1. Vorrichtung zur Befestigung eines Entfernungssensors, insbesondere eines Abstandsradars, an einem Kraftfahrzeug,
- wobei der Entfernungssensor (1) in einem geschlossenen Gehäuse (3a,3b) untergebracht ist,
- wobei das Gehäuse (3a,3b) bewegbar an einem Halter (2) befestigt ist und
- wobei der Halter (2) unbeweglich an dem Kraftfahrzeug befestigbar ist,
**dadurch gekennzeichnet,**
- **daß** das Gehäuse (3) mit wenigstens drei, näherungsweise L-förmig zueinander angeordneten Schrauben (9,10,11) an dem Halter (2) befestigbar ist,
- **daß** die Schrauben (9,10,11) im eingebauten Zustand des Entfernungssensors von dessen Vorderseite her schraubbar sind und
- **daß** für wenigstens zwei der Schrauben (10,11) eine Ausdrehsicherung (4) vorgesehen ist.

2. Vorrichtung nach Anspruch 1, **dadurch gekennzeichnet, daß** die Schrauben (9,10,11) selbstschneidende Gewinde besitzen und daß der Halter (2) Einschraubbereiche (13) aufweist, die vor einem erstmaligen Eindrehen einer Schraube (9,10,11) nahezu oder vollständig gewindelos sind.

3. Vorrichtung nach Anspruch 1, **dadurch gekennzeichnet, daß** die Schrauben (9,10,11) einen kugelförmigen Schraubenkopf (14) aufweisen.

4. Vorrichtung nach Anspruch 1, **dadurch gekennzeichnet, daß** die Schrauben (10,11), für die eine Ausdrehsicherung (4) vorgesehen ist, eine Nut (16) aufweisen, in die Fangelemente (19,21) der Ausdrehsicherung (4) greifen.

5. Vorrichtung nach Anspruch 4, **dadurch gekennzeichnet, daß** die Nut (16) auf der einen Seite von einem steilen Anschlag (17.2) und auf der anderen Seite von einem weniger steilen Anschlag (17.1) begrenzt ist.

6. Vorrichtung nach Anspruch 1, **dadurch gekennzeichnet, daß** die Schrauben (10,11), für die eine Ausdrehsicherung (4) vorgesehen ist, an ihrem Ende eine tellerartige Abflachung und/oder eine wulstartige Verdickung aufweisen.

7. Vorrichtung nach Anspruch 1, **dadurch gekennzeichnet, daß** in die Enden der Schrauben (10,11), für die eine Ausdrehsicherung (4) vorgesehen ist, jeweils ein Federring eingeclipst ist.

8. Vorrichtung nach Anspruch 1, **dadurch gekennzeichnet, daß** der Halter (2) vollständig aus Kunststoff besteht.

9. Vorrichtung nach Anspruch 1, **dadurch gekennzeichnet, daß** der Halter (2) Anschlagstellen (22) aufweist, die die Bewegbarkeit des Entfernungssensors (1) dann, wenn er an dem Halter (2) befestigt ist, in wenigstens eine Richtung begrenzen.

## Claims

1. Apparatus for mounting a range sensor, in particular a distance radar, on a motor vehicle,
- with the range sensor (1) being accommodated in an enclosed housing (3a, 3b),
- with the housing (3a, 3b) being mounted on a holder (2) such that it can move, and
- with the holder (2) being capable of being mounted on the motor vehicle such that it cannot move,
**characterized**
- **in that** the housing (3) can be attached to the holder (3) by means of at least three screws (9, 10, 11) which are arranged approximately in an L-shape with respect to one another,
- **in that**, when the range sensor is fitted, the screws (9, 10, 11) can be turned from the front face of said range sensor, and
- **in that** an unscrewing protection device (4) is provided for at least two of the screws (10, 11).

2. Apparatus according to Claim 1, **characterized in that** the screws (9, 10, 11) have self-tapping threads, and **in that** the holder (2) has screw-in regions (13) which have virtually no thread, or no thread whatsoever, before a screw (9, 10, 11) is first screwed in.

3. Apparatus according to Claim 1, **characterized in that** the screws (9, 10, 11) have a spherical screw head (14).

4. Apparatus according to Claim 1, **characterized in that** the screws (10, 11) for which an unscrewing protection device (4) is provided have a groove (16) in which holding elements (19, 21) of the unscrewing protection device (4) engage.

5. Apparatus according to Claim 4, **characterized in that** the groove (16) is bounded on one side by a steep stop (17.2) and is bounded on the other side by a less steep stop (17.1).

6. Apparatus according to Claim 1, **characterized in that** the screws (10, 11) for which an unscrewing protection device (4) is provided have a plate-like flattened region and/or a bead-like thickened region at their end.

7. Apparatus according to Claim 1, **characterized in that** a spring ring is clipped into the end of each of the screws (10, 11) for which an unscrewing protection device (4) is provided.

8. Apparatus according to Claim 1, **characterized in that** the holder (2) is composed entirely of plastic.

9. Apparatus according to Claim 1, **characterized in that** the holder (2) has stop points (22) which bound the movement capability of the range sensor (1) in at least one direction when it is attached to the holder (2).

## Revendications

1. Dispositif de fixation d'un capteur de distance, notamment d'un radar de distance sur un véhicule automobile, dont
- le capteur de distance (1) est logé dans un boîtier (3a, 3b) fermé,
- le boîtier (3a, 3b) est fixé de manière mobile sur un support (2), et
- le support (2) est fixé de manière définitive au véhicule,
**caractérisé en ce que**
- le boîtier (3) est fixé au support (2) par au moins trois vis (9, 10, 11) disposées sensiblement suivant une forme de (L),
- les vis (9, 10, 11) peuvent se visser par la face avant lorsque le capteur de distance est monté, et
- une protection antidévissage (4) est prévue pour au moins deux vis (10, 11).

2. Dispositif selon la revendication 1,
**caractérisé en ce que**
les vis (9, 10, 11) ont des filets auto-taraudants et le support (2) comporte des zones de vissage (13) pratiquement ou totalement sans filetage avant le premier vissage d'une vis (9, 10, 11).

3. Dispositif selon la revendication 1,
**caractérisé en ce que**
les vis (9, 10, 11) ont une tête de vis sphérique (14).

4. Dispositif selon la revendication 1,
**caractérisé en ce que**
les vis (10, 11) ont une rainure (16) pour une protection antidévissage (4), pour recevoir des éléments d'accrochage (19, 21) de la protection antidévissage (4).

5. Dispositif selon la revendication 4,
**caractérisé en ce que**
la rainure (16) est limitée d'un côté par une butée raide (17.2) et de l'autre côté par une butée moins raide (17.1).

6. Dispositif selon la revendication 1,
**caractérisé en ce que**
les vis (10, 11) recevant une protection antidévissage (4) ont à leurs extrémités une partie aplatie en forme de coupelle et/ou un renforcement en forme de bourrelet.

7. Dispositif selon la revendication 1,
**caractérisé en ce que**
les extrémités des vis (10, 11) destinées à recevoir une protection antidévissage (4) comportent chacune une bague élastique enclipsée.

8. Dispositif selon la revendication 1,
**caractérisé en ce que**
le support (2) est complètement en matière plastique.

9. Dispositif selon la revendication 1,
**caractérisé en ce que**
le support (2) comporte des butées (22) qui limitent la mobilité du capteur de distance (1) dans au moins une direction lorsqu'il est fixé au support (2).
